(19) Europäisches Patentamt
European Patent Office
Office européen des brevets

(11) Publication number: **0 410 434 A2**

(12) # EUROPEAN PATENT APPLICATION

(21) Application number: **90114293.5**

(51) Int. Cl.5: **H02J 13/00**, H05B 39/00

(22) Date of filing: **25.07.90**

(30) Priority: **28.07.89 JP 194350/89**
**28.02.90 JP 47454/90**
**28.02.90 JP 47786/90**

(43) Date of publication of application:
**30.01.91 Bulletin 91/05**

(84) Designated Contracting States:
**DE GB**

(71) Applicant: **TOSHIBA LIGHTING & TECHNOLOGY CORPORATIONION**
**4-28, Mita 1-chome**
**Minato-ku Tokyo(JP)**

(72) Inventor: **Yamazaki, Kyoji, 509**
**Raineshaimu-Tsunashimaniban.**
**1502 Shinoyoshida-cho, Kohoku-ku**
**Yokohama-shi(JP)**
Inventor: **Nagata, Yoshio**
**105 Sunny-Villa, 645-21, Futoo-cho**
**Kohoku-ku, Yokohama-shi(JP)**
Inventor: **Watanabe, Yuichi**
**3-23, Yasuura-cho**
**Yokosuki-shi, Kanagawa-ken(JP)**

(74) Representative: **Henkel, Feiler, Hänzel & Partnerner**
**Möhlstrasse 37**
**D-8000 München 80(DE)**

(54) **Lighting remote monitor/control system.**

(57) Each of terminal devices ($16_1$ to $16_n$, 20) includes a control power source circuit (38; 72) for receiving a signal voltage through a transmission signal line (14) and generating a first source power for controlling a self terminal device in the terminal devices, a relay power source circuit (56; 76), connected to a load power source for driving a plurality of lighting devices, which is separate from the control power source circuit (38; 72), for generating a second source power, a plurality of latching relays (46, 48, 50; $78_1$ to $78_4$) having contacts (50; $78_{11}$ to $78_{42}$) arranged on power lines between the relay power source circuit (56; 76) and the lighting devices, and contacts functioning to open/close the power lines, and the latching relays functioning to switch the contacts (50; $78_{11}$ to $78_{42}$), relay control means (40; 74, 80) for controlling the latching relays (46, 48, 50; $78_1$ to $78_4$), on the basis of the control data input from a master device (12) through the transmission signal line (14), transmission abnormality detection circuit (42; 94) for detecting the transmission abnormality in the transmission signal line (14), and a fail-safe drive circuit (44, 54; 76) for driving the latching relays (46, 48, 50; $78_1$ to $78_4$) to open/close the contacts (50; $78_{11}$ to $78_{42}$), when the transmission abnormality detection circuit (42; 94) has detected transmission abnormality.

TO LOAD POWER SOURCE
TO LIGHTING LOAD
ON-SIGNAL
OFF-SIGNAL
POWER SOURCE
SIGNAL PROCESSOR
TRANSMISSION ABNORMALITY DETECTOR
TRANSMITTER

FIG 4

EP 0 410 434 A2

# LIGHTING REMOTE MONITOR/CONTROL SYSTEM

The present invention relates to a lighting remote monitor/control system for controlling lighting devices arranged in the rooms, passageways, etc. in a large building or the like in a centralized manner. More specifically, this invention relates to a system for turning on/off one or more lighting devices connected to each of a plurality of terminal devices, in a centralized manner in response to signals transmitted from a master device.

For example, Published Examined Japanese Patent Application No. 61-24792 discloses a lighting remote monitor/control system for turning on/off one or more lighting devices connected to each of a plurality of terminal devices, in a centralized manner in response to signals transmitted from a master device. According to this technique, a master device and a plurality of terminal devices are connected to transmission signal lines, and signals are transmitted between the master device and the terminal devices. The lighting devices connected to the terminal devices are driven by a latching relay operation. When abnormality such as short-circuit or breakage occurs in the transmission signal lines, the abnormality is detected and the latching relay of each terminal device is controlled to turn on all lighting devices. Thus, the fail-safe operation is carried out.

In the conventional system, however, all lighting devices are turned on when abnormality occurs, irrespective of whether or not a lighting power source is provided. For example, when power outage occurs in the system at night, all lighting devices are turned on until morning. On the other hand, if power outage occurs in the daytime, lighting devices, which need not be turned on, are turned on, and it is required to turn them off.

In the case where a power source for a master device differs from a power source for lighting devices in terminal devices, if only the power source for the lighting devices is stopped, the control data of lighting devices controlled by the master device does not coincide with the actual operation data of the lighting devices.

An object of the present invention is to provide a lighting remote monitor/control system wherein a power source for lighting devices controlled in terminal devices is provided separately from the power source for the master device; when abnormality occurs in a transmission signal line, a fail-safe function is performed to turn on all lighting devices. When the power source for the lighting devices has failed, the fail-safe function is prohibited and the turning on/off state at the time of power failure is maintained.

Another object of this invention is to provide a lighting remote monitor/control system wherein the data representative of the detection of power outage is transmitted to the master device, at least, during the turning-on of the lighting device.

According to the present invention, there is provided a system for remotely controlling a plurality of lighting devices, comprising: a master device for controlling the turning on/off states of all lighting devices; a transmission signal line for transmitting control data for controlling the turning on/off states of the lighting devices from the master device; and a plurality of terminal devices, each connected between the transmission signal line and the lighting devices, for turning on/off the lighting devices in accordance with the control data transmitted from the master device through the transmission signal line, wherein each of said terminal devices includes: a control power source circuit for receiving a signal voltage through the transmission signal line and generating a first source power for controlling a self terminal device in said terminal devices; a relay power source circuit, connected to a load power source for driving said lighting devices, which is separate from said control power source circuit, for generating a second source power; a plurality of latching relays having contacts arranged on power lines between the relay power source circuit and the lighting devices, said contacts functioning to open/close the power lines, and said latching relays functioning to switch the contacts; relay control means for controlling said latching relays, on the basis of the control data input from the master device through the transmission signal line; transmission abnormality detection circuit for detecting the transmission abnormality in said transmission signal line; and a fail-safe drive circuit for driving the latching relays to open/close the contacts, when said transmission abnormality detection circuit has detected transmission abnormality.

This invention can be more fully understood from the following detailed description when taken in conjunction with the accompanying drawings, in which:

Fig. 1 is a block diagram showing the entire structure of a lighting remote monitor/control system according to first and second embodiments of the present invention;

Fig. 2 is a block diagram for illustrating the function of the master device;

Fig. 3A and Fig. 3B illustrate transmission signal formats;

Fig. 4 shows the circuit structure of each terminal device according to the first embodiment;

Fig. 5A and Fig. 5B show the circuit structure of each terminal device according to the second embodiment;

Fig. 6 is a flowchart for illustrating the operation of the master device;

Fig. 7 is a flowchart for illustrating the operation of the terminal device shown in Fig. 5A and Fig. 5B;

Figs. 8A to 8E are timing charts of detailed formats in the respective operation modes of the transmission signals;

Fig. 9 is a flowchart for illustrating the operation of the terminal device shown in Figs. 5A and 5B in the monitor mode; and

Fig. 10 is a flowchart for illustrating the operation of the terminal device shown in Figs. 5A and 5B in the slave activation mode.

Embodiments of the present invention will now be described with reference to the accompanying drawings.

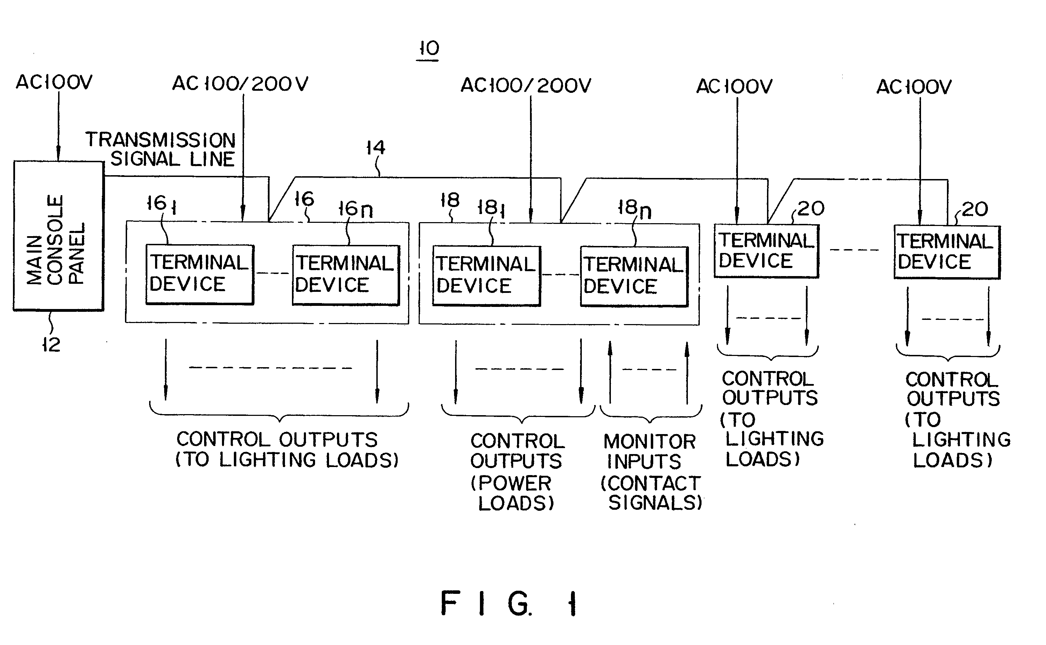

Fig. 1 shows the structure of a lighting remote monitor/control system 10. A master device or a main console panel 12 is connected to control panels 16 and 18 through a transmission signal line 14. In addition, the main console panel 12 is connected to a plurality of distributed terminal devices 20 through the transmission signal line 14. The control panels 16 and 18 are provided, respectively, with an n-number of terminal devices $16_1$ to $16_n$ and an n-number of terminal devices $18_1$ to $18_n$.

Signals are transmitted between the main console panel 12 and the terminal devices $16_1$ to $16_n$, $18_1$ to $18_n$, and 20 through the transmission signal line 14. Specifically, signals are transmitted from the main console panel 12 to the terminal devices in a voltage mode, and signals are transmitted from the terminal devices to the main console panel 12 in a current mode.

The control panel 16 supplies control outputs to lighting loads (not shown) to control the same. The control panel 18 supplies control outputs to power loads (not shown) to control the same, and also receives non-voltage contact signals as monitor signals. The distributed terminal devices 20 output control outputs to lighting loads (not shown) to control the same.

The main console panel 12 is supplied with power of AC 100 V. The control panels 16 and 18 are individually supplied with power of AC 100/200 V for driving the lighting loads connected to the terminal devices $16_1$ to $16_n$ and $18_1$ to $18_n$, relays provided within the terminal devices, and monitor input circuits. The terminal devices 20 are individually supplied with power of AC 100 V for driving the lighting loads connected to the terminal devices 20 and for driving latching relays provided within the terminal devices 20.

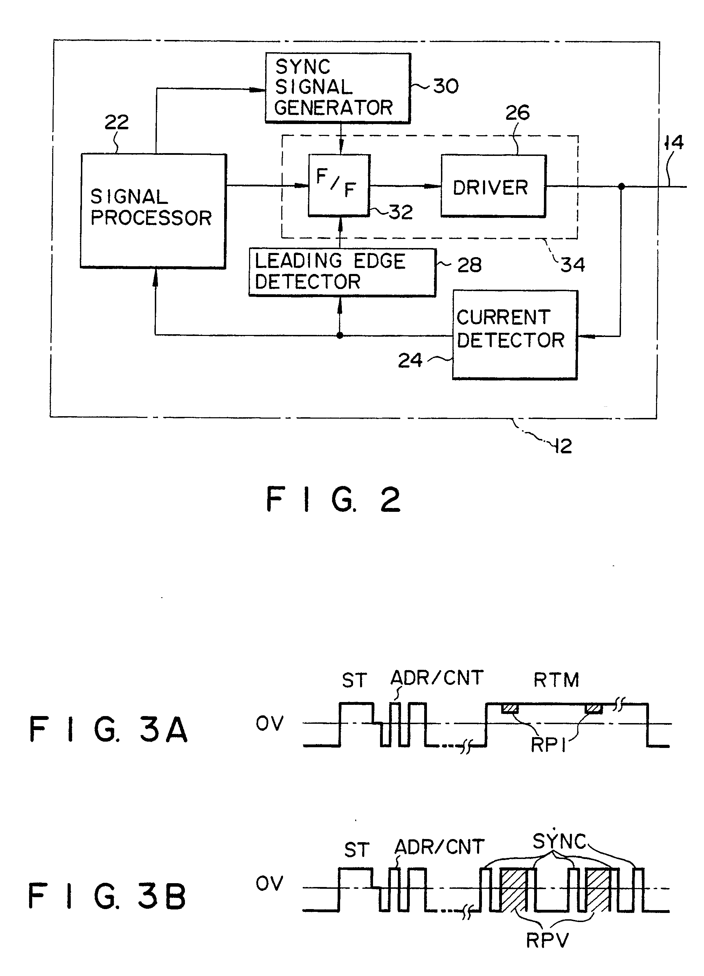

Fig. 2 is a functional block diagram of the main console panel 12. As is shown in the figure, the main console panel 12 comprises a signal processor 22, a current detector 24, a driver 26, a leading edge detector 28, a sync signal generator 30, and a flip-flop (F/F) 32. Note that the main console panel 12 are provided, when necessary, with a keyboard, switches, or sensors for inputting data, and a display unit such as a CRT for displaying various data, etc. (not shown).

The signal processor 22 fetches data from the keyboard, switches, sensors, or the like in accordance with a predetermined sequence, acquires monitor data of the terminals, generates a control signal on the basis of this data, and enables the monitor display unit to display data. The signal processor 22 also generates a transmission voltage signal including the control signal. The voltage signal is supplied to the driver 26 via the flip-flop 32, and is transmitted through the transmission line 14 as a transmission signal. The format of the transmission voltage signal is as shown in Fig. 3A.

In Fig. 3A, the transmission voltage signal includes a start signal ST consisting of a "1"-level long pulse signal, a transmission signal ADR/CNT consisting of "1"-level short pulses corresponding in number to 1/2 a predetermined bit count and indicating transmission data such as an address ADR of a destination terminal device, a control signal CNT, and the like, a return period signal RTM indicating a return standby period (or terminal transmission period) such as monitor data from a destination terminal device, and the like. In the transmission signal ADR/CNT, successive "1"- and "0"-level portions express 1-bit data, respectively. When "1"- or "0"-level portions continue to be short, they express data "0"; when long, they express data "1". In the figure, the signal ADR/CNT represents data "001 ...".

Referring back to Fig. 2, the current detector 24 converts to a voltage signal a current signal (a current mode signal such as monitor data indicated by hatched lines in Fig. 3A) flowing across the main console panel 12 and the terminal devices $16_1$ to $16_n$, $18_1$ to $18_n$, and 20 through the transmission line 14.

The driver 26 drives the transmission line 14 in accordance with a bipolar signal according to an input signal. For example, if an input signal is at "1"-level, the driver 26 pulls up the transmission line voltage to +24 V; if it is "0"-level, it pulls down the transmission line voltage to -24 V. A signal voltage output of the signal processor 22 is directly output to the driver 22 as the start signal ST and the transmission signal ADR/CNT, as is shown in Fig. 3B. However, the return period signal RTM output from the signal processor 22 during the return period is suitably processed by the F/F 32 and is then output. The F/F 32 and the driver 26 constitute a transmitter 34 of the main console panel 12 of this embodiment.

The leading edge detector 28 differentiates the output voltage of the current detector 24 to detect a leading edge of a current mode signal sent from each terminal device.

The sync signal generator 30 generates a sync signal SYNC at a predetermined cycle only in the return standby period (terminal transmission period) RTM for the transmission from each terminal device, $16_1$ to $16_n$, $18_1$ to $18_n$, 20, to the main console panel 12.

The voltage output of the F/F 32 goes to a high level in response to the leading edges of the voltage signal output from the signal processor 22 and the sync signal SYNC output from the sync signal generator 30, and goes to a low level in response to the trailing edges thereof. The F/F 32 inverts its output in response to a detection output from the leading edge detector 28 as a trigger signal. More specifically, the F/F 32 supplies to the driver 26 a voltage which varies in accordance with changes in output of the signal processor 22, during the transmission period of the address signal and control signal. When the output from the signal processor 22 is constant during the return standby period for the transmission from the terminal device, the F/F 32 supplies to the driver 26 a voltage having "1"-level when the current mode signal detected by the current detector 24 or the sync signal output from the sync signal generator 30 goes to "1"-level, and having "0"-level when the sync signal output falls to "0"-level.

The driver 26 is driven in accordance with the output voltage from the F/F 32, so that the signals shown in Figs. 3A and 3B are output. More specifically, the start signal ST and the transmission signal ADR/CNT are sent onto the transmission line 14 as voltage mode signals having the same waveform as that of the output from the signal processor 22. In the terminal transmission period RTM, when the sync signal SYNC is sent out from the main console panel 12 and a current mode signal RPI is sent from each terminal device in accordance with the sync signal SYNC, a voltage mode signal RPV corresponding to the signal RPI is sent onto the transmission line 14.

In the system shown in Fig. 1, during the terminal transmission period (return period) RTM, the current mode signal from each terminal device is converted to a voltage mode signal by the main console panel 12 and is sent onto the transmission line 14. For this reason, all the terminal devices $16_1$ to $16_n$, $18_1$ to $18_n$ and 20 can discriminate the contents of current mode signals from the downstream-side terminal devices (e.g. terminals $18_1$ ...) with respect to, e.g. the terminal device $16_n$ and from upstream-side terminals (e.g. terminal devices $16_1$ ...) with respect to, e.g. the terminal device $16_n$.

Therefore, any terminal device can discriminate signal transmission states of all the terminal devices in accordance with the voltage mode signals, and the terminal device itself can determine a ready state of the transmission line 14 or the presence/absence of signal collision. In other words, this embodiment realizes a random transmission system which is substantially free from signal collision without increasing a load of the main console panel 12 and has its inherent feature of high-speed transmission.

Furthermore, when each terminal device $16_1$ to $16_n$, $18_1$ to $18_n$, and 20 transmits a current mode signal, it discriminates the voltage mode signal, to which the current mode signal has been converted by the main console panel 12, thereby confirming that the main console panel 12 has received the current mode signal. Consequently, an answer signal from the main console panel 12 can be dispensed with, and a transmission speed can be increased regardless of a random or cyclic mode.

In the system shown in Fig. 1, there are provided two modes for activating monitor data of each terminal device $16_1$ to $16_n$, $18_1$ to $18_n$, and 20. One mode is called a central activation (master activation) mode wherein the main console panel 12 transmits a transmission demand signal (including the destination address and control signal) onto the transmission line 14 and receives monitor data sent back from the destination terminal device. The other is called a slave activation mode wherein the main console panel 12 receives transmission data (including self-address and monitor data) sent out at random from the terminal device in which transmission demand (e.g. indicated by a change in monitor data) is generated.

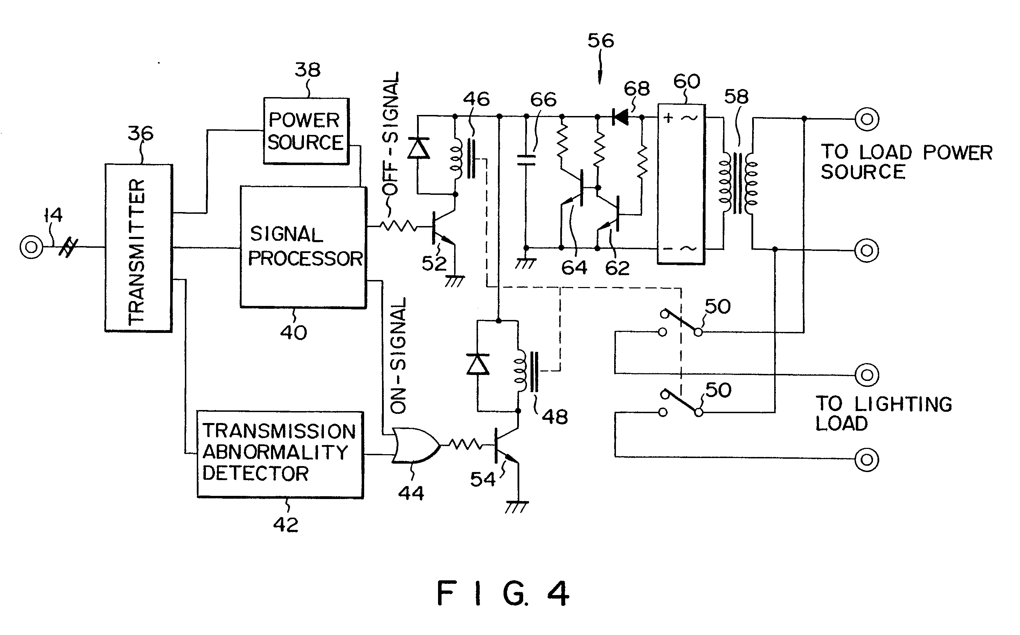

Each of the terminal devices $16_1$ to; $16_n$ and 20 for supplying control outputs to the lighting loads has a circuit shown in Fig. 4.

Transmission signals are transmitted between a transmitter 36 and the main console panel 12 over the transmission signal line 14. A control power circuit 38 receives a signal voltage from the transmitter 36 and generates control power. A signal processor 40 analyzes the transmission signal on the transmission signal line 14, and turns on/off a latching relay on the basis of the result of analysis, thus turning on/off the lighting load. A transmission abnormality detector 42 detects abnormality of the transmission signal line 14 such as breakage or short-circuit. An OR circuit 44 finds a logical sum of an ON-signal output from the signal processor 40 and an abnormality detection signal output from the transmission abnormality detector 42.

An OFF-winding 46, an ON-winding 48, and relay contacts 50 constitute the latching circuit. The relay contacts 50 are connected between a load power source (not shown) and a lighting load (not shown). A switching transistor 52 is turned on by an OFF-signal output from the signal processor 40, thereby causing an electric current to flow through the OFF-winding of the latching relay and turning off the latching relay. A switching transistor 54 is turned on by a high-level H (High) output from the OR circuit 44, thereby causing an electric current to flow through the ON-winding of the latching relay and turning on the latching relay.

A relay power circuit 56 receives a latching relay drive power from the load power source (not shown). The relay power circuit 56 comprises, as shown in Fig. 4, a transformer 58, a rectifier 60, transistors 62 and 64, a capacitor 66, and a diode 68.

In the normal state, the lighting loads are turned on/off when the signal processor 40 outputs an OFF-signal and an ON-signal in response to the transmission signal supplied over the transmission signal line 14. Specifically, when the signal processor 40 applies the OFF-signal to the base of the switching transistor 52 for driving the OFF-winding 46, the transistor 52 is turned on to allow an electric current to flow through the OFF-winding 46. Thus, the relay contact 50 is opened. Consequently, a predetermined lighting load is turned off. On the other hand, when the signal processor 40 outputs the ON-signal to the OR circuit 44, the ON-signal is applied through the OR circuit 44 to the base of the switching transistor 54 for driving the ON-winding 48. Consequently, an electric current is supplied to the ON-winding 48 to close the relay contact 50. Thus, a predetermined lighting load is turned on.

In the above case, the OFF-winding 46 and the ON-winding 48 are supplied with power from the load power source. More specifically, the voltage supplied from the load power source is lowered to a suitable value through the transformer 58 and then rectified by the rectifier 60. The rectified voltage is smoothed through the capacitor 66 to obtain a predetermined voltage. The predetermined voltage is applied to the OFF-winding 46 and the ON-winding. When power is supplied from the load power source, the transistor 62 is turned on and thereby the transistor 64 is turned off.

Suppose that the power supply from the load power source is stopped, for example, owing to power outage. In this case, the transistor 62 is turned off, while the transistor 64 is turned on by the charge stored in the capacitor 66. As a result, the charge in the capacitor immediately lowers to zero. Thereafter, power is not supplied to the OFF-winding 46 and ON-winding 48, and the relay contact 50 is not operated. In other words, in case of power outage, the fail-safe control is not effected, and the relay contact 50 remains in the state just before the power outage. When normal power supply is restored,. the load is turned on or off in the initial control state.

On the other hand, if transmission line abnormality is detected while power is being supplied from the load power source, the output signal from the transmission abnormality detector 42 or one input signal to the OR circuit 44 is set at an H (high)-level. Thus, the H-level signal is applied to the base of the switching transistor 54 for driving the ON-winding 48, thereby turning on the transistor 54. Since the load power is being supplied, an electric current flows through the ON-winding 48 in response to the turning-on of the transistor 54. Thus, the relay contact 50 is closed, and the fail-safe control in the case of transmission line abnormality is effected.

By virtue of the above-described structure of the terminal device for supplying control outputs to the lighting loads, the fail-safe control is not effected at the time of power outage. The fail-safe control is effected only at the time of transmission line abnormality such as line breakage or short-circuit, thereby turning on all lighting loads. When the power supply is restored from power outage, the lighting loads remain in the initial turned-on/turned-off state. Therefore, it is not necessary for the user to return the state of the lighting loads to the initial states. At the time of instantaneous power outage, the turning-on of all lighting loads is prevented, and the user does not feel uncomfortable.

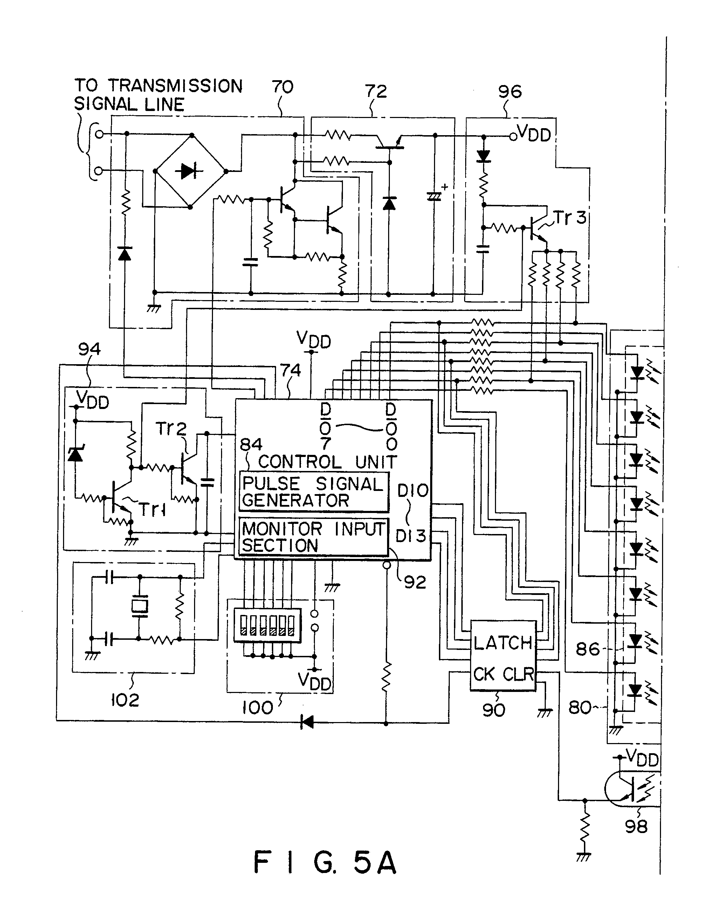

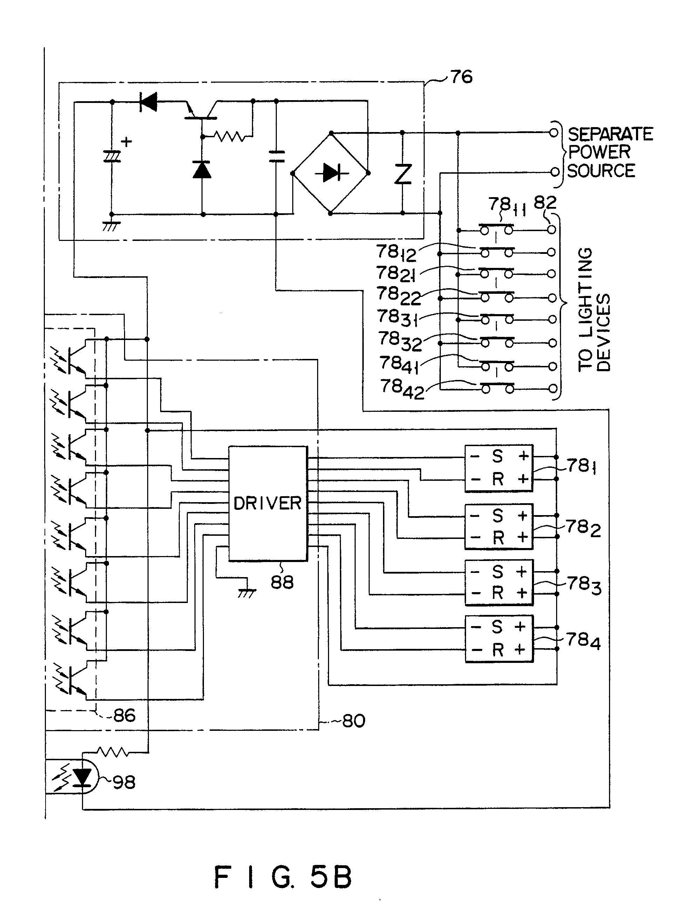

Figs. 5A and 5B show another example of the structure of each of the terminal devices $16_1$ to $16_n$ and for supplying control outputs to the lighting loads. The terminal device comprises a transmitter 70 for transmitting signals between the main console panel 12 and itself over the transmission signal line 14; a control power source circuit 72 for producing control power from a signal voltage input to the transmitter 70; a control unit 74 constituting a controller body; a relay power source circuit 76 connected to an external separate power source (load power source) for generating a relay drive power; four two-winding type latching relays $78_1$, $78_2$, $78_3$ and $78_4$; and a relay drive circuit 80 for driving the latching relays $78_1$ to $78_4$.

The latching relays $78_1$ to $78_4$ function to operate contacts $78_{11}$, $78_{12}$, $78_{21}$, $78_{22}$, $78_{31}$, $78_{32}$, $78_{41}$ and $78_{42}$ arranged in series in a power line connecting the separate power source and lighting devices (lighting loads) (not shown) connected to an output terminal section 82.

The control unit 74 includes a pulse signal generator 84 for generating pulse signals, on the basis of input signals from the transmission signal line 14, for controlling the latching relays $78_1$ to

$78_4$.

The relay drive circuit 80 includes a photocoupler circuit 86 for isolating the input side and the output side electrically, and a driver 88 for driving the latching relays $78_1$ to $78_4$. In the relay drive circuit 80, input-side light-emitting diodes of the photocoupler 86 are driven by pulse signals from the pulse signal generator 84. Outputs from output-side photo-transistors of the photocoupler circuit 86 are supplied to the driver 88. In accordance with the outputs from the photo-transistors, the driver 88 controls the latching relays $78_1$ to $78_4$. An earth for the driver 88 is different from that shown in Fig. 5A.

The pulse signals from the pulse signal generator 84 are also input to a control output data latch circuit 90 and are latched therein as control output data. The contents of latched data are read by the monitor input section 92 provided in the control unit 74. The monitor input section 92 transmits the read contents to the main console panel 12 through the transmission signal line 14.

The terminal device further includes a transmission abnormality detector 94, a fail-safe drive circuit 96, photocoupler 98, an address switch 100, and an oscillation circuit 102. The transmission abnormality detector 94 resets the contents of the control unit 74 to the initial state when power is turned on, and detects the absence of transmission output from the main console panel 12, or transmission abnormality, such as line breakage or short-circuit, occurring in the transmission signal line 14. When the transmission abnormality detector 94 has detected transmission abnormality, the fail-safe drive circuit 96 controls the relay drive circuit 80 and drives the latching relays $78_1$ to $78_4$, thereby closing the contacts $78_{11}$, $78_{12}$, $78_{21}$, $78_{22}$, $78_{31}$, $78_{32}$, $78_{41}$ and $78_{42}$. The photocoupler 98 serves as a power outage detector for detecting the power outage of the separate power source when the relay power source circuit 76 is turned off, and clearing the control output data latch circuit 90. The address switch 100 serves to set the address of the terminal device. The oscillation circuit 102 generates operation reference clocks for the control unit 74.

In the above-described embodiment, data is normally input from the main console panel 12 to the terminal device in the voltage mode. Specifically, the data is received by the transmitter 70 of the terminal device. The received data is then input to the control unit 74. The control unit 74 compares the address contained in the input data with the address set by the address switch 100. If the addresses coincide, the input data is taken in the control unit 74. The data output from the main console panel 12 may be generated by the time schedule in the main console panel 12, generated by switching operations, or generated after the main console panel 12 receives switch operation data in other terminal devices.

Once the data is taken in the control unit 74, the pulse signal generator 84 generates pulse signals for controlling the latching relays $78_1$ to $78_4$, and outputs them selectively from output terminals DO0 to DO7. In this case, the pulse signals output from the output terminals DO0 to DO1 correspond to the latching relay $78_1$. The pulse signal from the output terminal DO0 drives a set coil (not shown), and the pulse signal from the output terminal DO1 drives a reset coil (not shown). In each of the latching relays $78_1$ to $78_4$, "R" denotes a reset coil and "S" denotes a set coil. The pulse signals output from the output terminals DO2 to DO3 correspond to the latching relay 782, and the pulse signal from the output terminal DO2 drives a set coil (not shown) while the pulse signal from the output terminal DO3 drives a reset coil (not shown). The pulse signals output from the output terminals DO4 to DO5 correspond to the latching relay $78_3$, and the pulse signal from the output terminal DO4 drives a set coil (not shown) while the pulse signal from the output terminal DO5 drives a reset coil (not shown). The pulse signals output from the output terminals DO6 to DO7 correspond to the latching relay $78_4$, and the pulse signal from the output terminal DO6 drives a set coil (not shown) while the pulse signal from the output terminal DO7 drives a reset coil (not shown).

Pulse signals are used as output signals from the control unit 74 for turning on/off the lighting loads, because the use of the pulse signals decreases power consumption. In addition, since such pulse signals are used, the latching relays are used as relays.

The pulse signals from the control unit 74 are input to the relay drive circuit 80. In this case, in the relay drive circuit 80, the section of the transmission signal line (14) side is electrically isolated by the photocoupler circuit 86, and corresponding signals are input to the driver 88. The latching relays $78_1$ to $78_4$ are selectively set and reset by the relay drive circuit 80. The contacts $78_{11}$, $78_{12}$, $78_{21}$, $78_{22}$, $78_{31}$, $78_{32}$, $78_{41}$ and $78_{42}$ corresponding to the latching relays $78_1$ to $78_4$ are switched. Thus, the lighting devices connected to the output terminal section 82 are turned on or off.

On the other hand, when pulse signals for setting or resetting the latching relays are output from the control unit 74, as has been stated above, the pulse signals are latched as control output data in the control output data latch circuit 90. The latched output from the latch circuit 90 is applied to data input terminals DI0 to DI3 of the control unit 74. The monitor input section 92 in the control unit 74 reads in the latched data applied to tha data input terminals DI0 to DI3, and transmits the data in the form of current mode signals to the main console panel 12 through the transmitter 70.

In this manner, the main console panel 12 exactly confirms the operation state of the lighting loads.

Then, if transmission output from the main console panel 12 is stopped, or if abnormality such as line breakage or short-circuit occurs in the transmission signal line 14, this undesirable state is detected by the transmission abnormality detector 94. Specifically, in the abnormality detector 94, a transistor Tr1 is turned off, and a transistor Tr2 is turned on, thereby operating the fail-safe drive circuit 96. Specifically, a transistor Tr3 is turned on to input signals to the photocoupler circuit 80. Consequently, the photocoupler circuit 80 operates in the same state wherein pulse signals are output from the output terminals DO0, DO2, DO4 and DO6 of the control unit 74. Consequently, the driver 88 is actuated, and the set coils of the latching relays $78_1$ to $78_4$ are forcibly driven. Thus, all contacts $78_{11}$, $78_{12}$, $78_{21}$, $78_{22}$, $78_{31}$, $78_{32}$, $78_{41}$ and $78_{42}$ are turned on, and all lighting devices are driven.

In this manner, when transmission output from the main console panel 12 is stopped, or abnormality such as breakage or short-circuit occurs in the transmission signal line 14, the fail-safe function is effected thereby turning on all lighting devices.

In addition, when the separate power source for supplying power to the lighting devices are stopped at least while the lighting devices are turned on, the relay power source circuit 76 is turned off to stop the operation of the photocoupler 98. Thus, the power outage is detected. Subsequently, the contents of the control output data latch circuit 90 are cleared, and the contents of the latch circuit 90 ara taken in the monitor input section 92 in the control unit 74. Then, the power outage is told to the main console panel 12 through the transmitter 70.

Thus, the main console panel 12 confirms that all lighting devices have been turned off owing to power outage.

In the case of the power outage, the fail-safe drive circuit 96 is not operated, unlike in the case of transmission abnormality. When power outage occurs, the operation of the relay power circuit 76 is stopped and accordingly the operation of the photocoupler circuit 80 is stopped. Thus, the latching relays $78_1$ to $78_4$ are not operated, and the state of the lighting devices before the power outage is kept. When power supply is restored, such a situation does not occur that all lighting devices are turned on. For example, data may be transmitted from the main console panel 12 to determine which lighting devices are to be turned on.

According to the structure shown in Figs. 5A and 5B, like the structure shown in Fig. 4, the fail-sale function is not effected when power supply to the lighting devices is interrupted. For example, even if power outage occurs in the system and supply supply is restored at night, such a situation can be avoided that all lighting devices are turned on until morning. In addition, even if power outage occurs and power supply is restored in the daytime it is not necessary to turn off lighting devices, which were turn on unnecessarily.

In the structure shown in Figs. 5A and 5B, the transformer shown in Fig. 4 is not used. The transmission side is insulated from the driving side by means of a photocoupler.

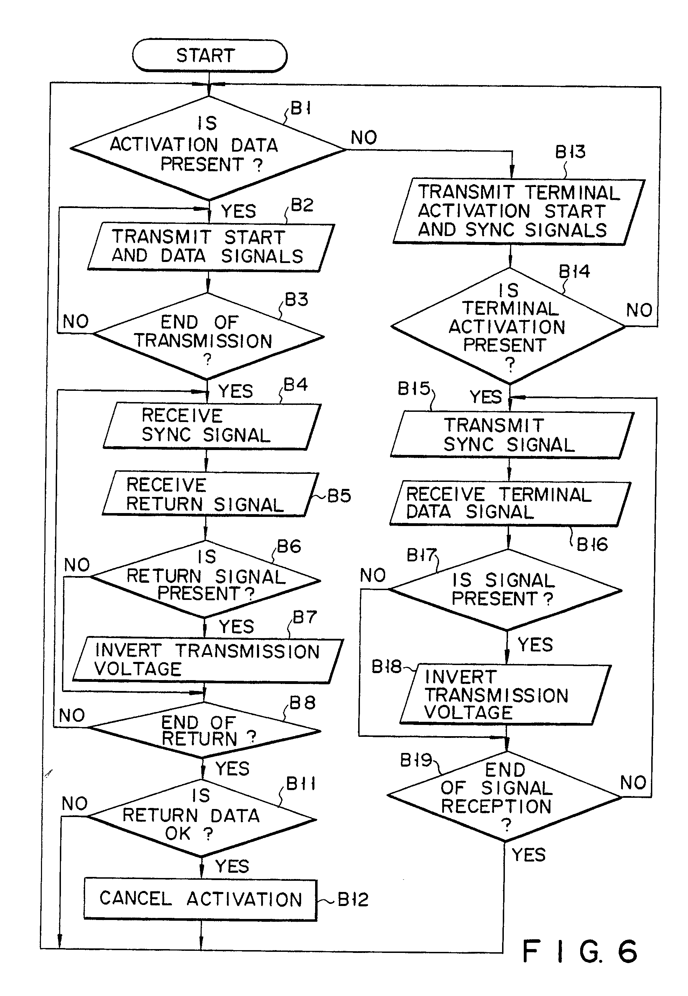

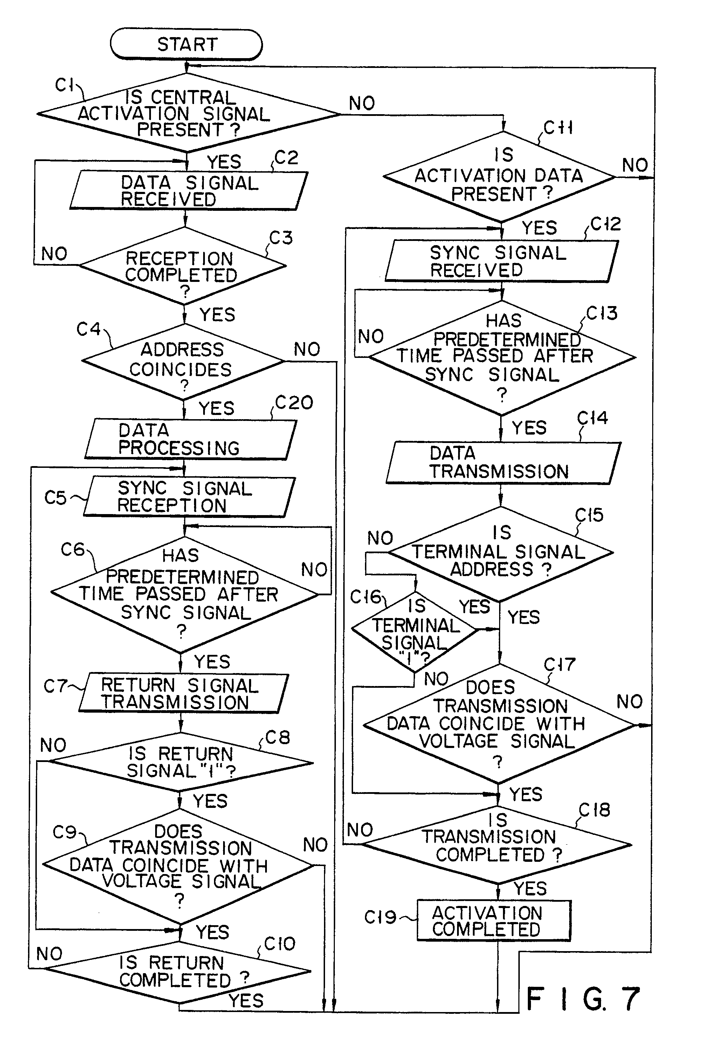

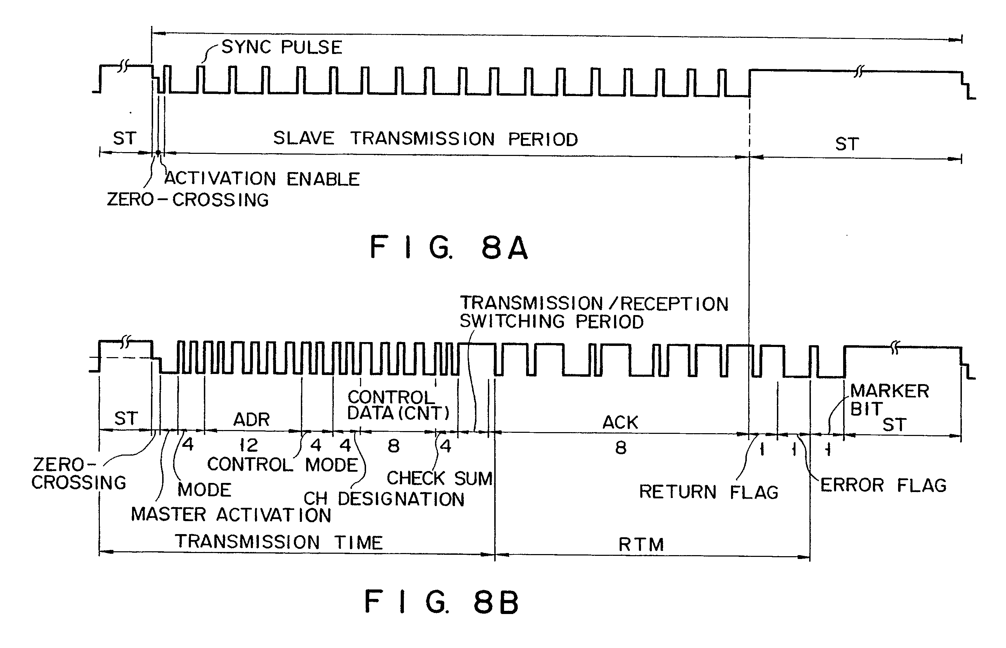

The operation of the system using the terminal device having the structure shown in Figs. 5A and 5B will now be described in greater detail, with reference to flowcharts of Figs. 6 and 7 and timing charts of Figs. 8A to 8E.

The main console panel 12 and the terminal device are designed in the aspects of software and hardware, so as to carry out the operations which will be described below. The structure thereof may be freely designed in accordance with the chosen operation.

When the power switches of the main console panel 12 and the terminal device are turned on, the various memories, flags, registers, and the like incorporated therein are initialized. Then, the main console panel 12 and the terminal device execute endless loop processing, as illustrated in the flowcharts of Figs. 6 and 7, respectively.

<1. Operation of Main Console Panel 12>

Referring to Fig. 6, the main console panel 12 discriminates the presence/absence of activation data in step B1. The activation data means data sent from one device to another device. In this case, if data to be sent to each terminal device, i.e. activation data is detected, (i) central activation (master activation) processing in step B2 through B12 is executed; otherwise, (ii) normal mode processing in steps B13 to B20 is executed.

(i) Central Activation Processing

In the central activation processing, in step B2, transmission data having a start signal ST, a destination terminal address ADR, a control signal (activation data) CNT, and the like shown in Figs. 8B through 8D is transmitted in a voltage mode from the driver onto the transmission line 14 in accordance with the activation data. Fig. 8A shows the normal mode (20 ms at one power supply cycle = 50 Hz; 16.7 ms at the cycle = 60 Hz).

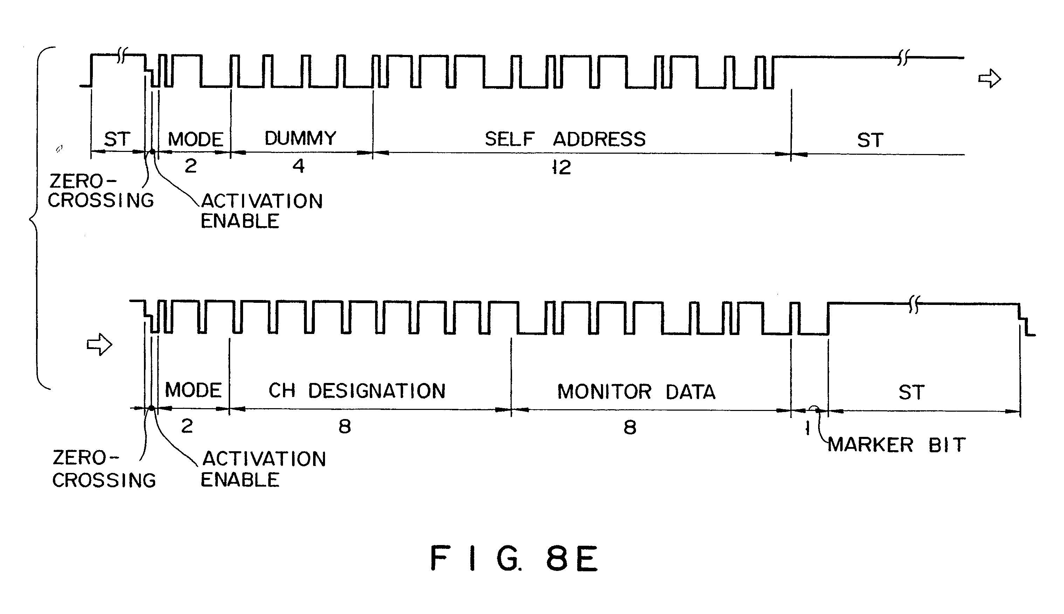

Figs. 8B through 8D show transmission signals in a master activation mode and respectively indicate a control mode, a monitor mode, and a slave activation cancel mode. Fig. 8E shows a transmission signal in a slave activation mode (to be described later).

The transmission data is output bit by bit via every processing in step B2. In step B3, it is checked if the processing in step B2 is repeated the predetermined number of times corresponding to the number of bits of the transmission data. If the processing count in step B2 is smaller than the predetermined number of times, the flow returns to step B2. If the processing in step B2 is repeated the predetermined number of times and a voltage mode signal consisting of the predetermined number of bits is transmitted, end of transmission is determined in step B3, and the flow advances to step B4.

In step B4, a sync signal of a "1"-level voltage pulse is generated. In step B5, the output from a current detector 20 is fetched, and the presence/absence of a current mode signal from each terminal is then checked in step B6. If one bit (return or terminal signal) of data to be transmitted is "1", the terminal device transmits a current mode signal; if it is "0", it does not transmit the current mode signal. Therefore, when no current mode signal is detected within a predetermined period of time (e.g. 600 µs), this means that one bit (return signal) of the data to be transmitted corresponding to an interval to which the predetermined period of time belongs is "0"; when detected, this means that the bit (return signal) is "1".

If it is determined in step B6 that the return signal is present, an output voltage from the driver 26 is inverted in step B7. If no return signal is detected, the flow directly advances to step B8 while skipping step B7, that is, without inverting the output voltage from the driver 26.

In step B8, it is checked if a return operation from the terminal device is completed. If generation of sync signals (step B4) and reception of return signals (step B5) are not completed for all the bits of return data, the flow returns from step B8 to B4 and processing in steps B4 through B8 is repeated, since the return operation is not yet completed.

When the processing in steps B4 through B8 is executed the same number of times as the number of bits of the return data, it is determined in step B8 that the return operation from the terminal device is completed, and the flow goes to step B11.

In step B11, it is checked whether the return data is normal. This checking operation is effected, for example, such that the same signal as the transmitted control signal CNT is returned as an affirmative response ACK, and it is examined whether the affirmative response ACK coincides with the control signal CNT transmitted from the terminal device. Alternatively, a status signal indicating a normal/abnormal detection result of transmission/reception in the terminal device is added to the end of return data from the terminal device, and the checking operation in steep B11 may be performed, depending on whether or not the status data is received.

In step B11, if the return data is normal, the activation data is cleared in step B12 to cancel activation, and the flow then returns to step B1. If it is determined in step B11 that the return data is abnormal, the flow skips step B12, and directly returns from step B11 to B1. In this case, since the activation data remains, the presence of the activation data is determined in step B1, and the central activation processing is executed once again. Specifically, the central activation processing is repeated until the activation data is normally transmitted.

(ii) Normal Mode Processing

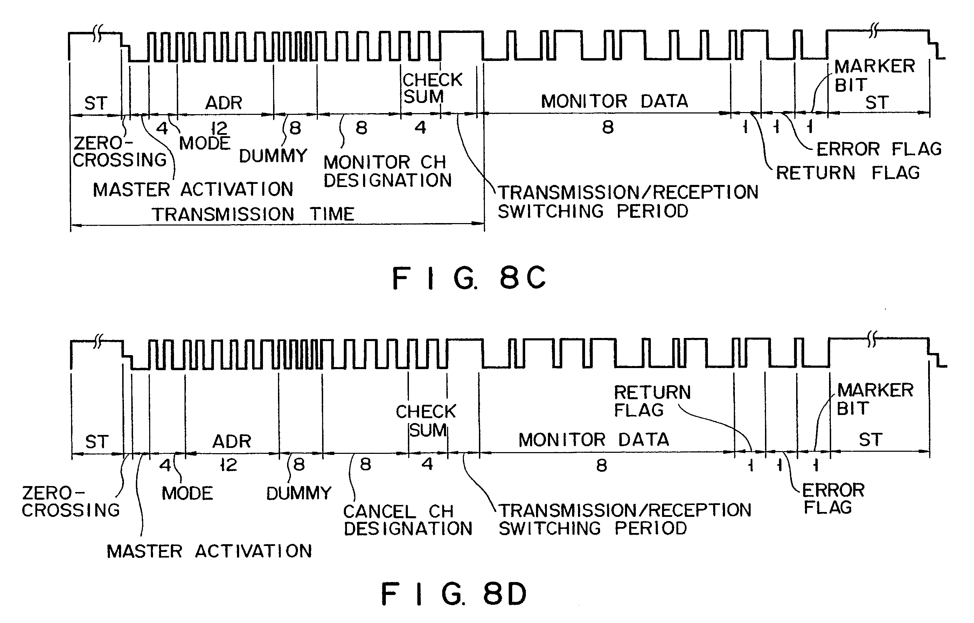

If the absence of the activation data is determined in step B1, a terminal activation start signal and the first sync signal for terminal activation, shown in Fig. 8, are transmitted in step B13. It is then checked in step B14 if a current mode activation signal is transmitted from the terminal device. If there is no response from any terminal device within a predetermined period of time (e.g. 600 µs) in response to the sync signal following the first start signal, it is determined that no terminal activation is performed, and the flow returns to step B1.

If the terminal activation signal shown in Fig. 8E is detected in step B14, the presence of terminal activation is determined, and the flow advances to step B15. The normal mode processing in steps B15 through B19 is then executed.

In the normal mode processing, the first sync signal is transmitted in step B15, and the output from the current detector 24 is fetched in step B16. As has been described above, in this embodiment, the absence of a current mode signal within the predetermined period of time (e.g. 600 µs) means that one bit of terminal data corresponding to an interval to which the predetermined period of time belongs is "0'; the presence of the current mode signal means that the bit is "1".

In step B17, the fetched output of the current detector 24 is checked. If the current mode signal is detected, since the bit (terminal signal) of the terminal data corresponding to the present timing is "1", the output voltage of the driver 26 is inverted in step B18, and the flow advances to step B19.

If no terminal signal is received after the passing of the predetermined period of time in step B17, since the bit of the terminal data corresponding to the present timing is "0", the flow skips the processing in step B18, and advances from step B17 to step B19. In this case, the output voltage of the driver 26 to the transmission line 14 is not inverted.

It is checked in step B19 whether sync signal processing (step B15), reception processing (step B16), signal presence/absence determination processing (step B17), and the like are completed for all the bits of terminal data. If NO in step B19, the flow returns to step B15, and the processing in steps B15 through B19 is repeated.

<2. Operation of Terminal Device>

Referring to Fig. 7, the terminal device checks in step C1 if the main console panel 12 transmits a voltage mode central activation signal. If YES in step C1, i.e. if the main console panel 12 transmits the central activation signal by the processing in step B2 in Fig. 6, the control flow advances to step C2, and return processing in steps C2 to C10 is executed. However, if NO in step C1, the presence/absence of activation data is checked in step C11. If there is data to be transmitted to the main console panel 12, i.e. activation data, terminal activation (slave activation) processing as loop processing of steps C12 to C19 is executed. If no central activation signal is transmitted in step C1 and if there is no termination data to be transmitted to the main console panel 12 from the terminal device, the control flow goes back to step C1.

(i) Return Processing

In the return processing, voltage mode transmission data which is transmitted from the main console panel 12 (steps B2 and B3 in Fig. 6) is received bit by bit for every loop processing of steps C2 and C3 on the basis of the output from the transmitter 70. If the reception of the predetermined number of bits is completed, the flow advances from step C3 to step C4. In step C4, it is discriminated if the address data in the received transmission data coincides with the self address. If the transmission system is not a check-sum system, this discrimination may be carried out in step C1 by receiving the address data. In step C4, if the addresses coincide, the control flow goes from step C4 to step C20. If they do not coincide, the flow returns to step C1.

In step C20, control data (CNT) in the transmission data is read, and processing such as relay control is performed on the basis of the read control data. Then, in step C5, the control stands by until the sync signal is received. If the sync signal is received, the control stands by for a predetermined period of time (e.g. 50 μs) in step C6. Thereafter, in step C7, one bit (return signal) of return data is transmitted in the current mode from the transmitter 70 onto the transmission line 14. The current mode return signal is received by the main console panel 12 (step B5 in Fig. 6), and the output voltage mode from the main console panel 12 is thus inverted (step B7 in Fig. 6).

In step C8, it is checked if the return signal is "1". If YES in step C8, the flow skips step C9 and advances to step C10. In step C9, the voltage mode signal on the transmission line 14 is received, and it is checked if the content of the received signal coincides with the content of the return signal which was sent immediately before reception. If YES in step C9, it is clear that the return signal transmitted in step C7 is received by the main console panel 12 and the voltage mode of the transmission line 14 is inverted. Thus, it is found that the transmission of the bit has normally been performed.

If the content of the return signal does not coincide with that of the received signal in step c9, it is clear that the bit (return signal) of return data is not correctly received by the main console panel 12, and therefore the control flow returns from step C9 directly to step C1. In this case, in the main console panel 12, the return data of the predetermined number of bits cannot be obtained (step B11 in Fig. 6). Thus, the activation cancel processing (step B12 in Fig. 6) is skipped and the central activation processing is executed once again. Specifically, the terminal device executes the return processing once again, and the central activation processing in the main console panel 12 and the return processing in the terminal device are repeated until the normal transmission of return can be performed.

In step C10, it is checked if the normal transmission of all bits of the return signal has been completed. If the return processing of all bits of return data including the self address, monitor data and marker bit signal is not completed, the control flow returns to step C5, and the processing in steps C5 to C10 is repeated for the subsequent bit (return signal). On the other hand, if the return processing for all bits is completed, the return processing is finished and the control flow returns to step C1.

As has been stated above, in each terminal, only "1"-level return signal of monitor data is checked, and "0"-level return signal is not checked. Thus, a plurality of terminals can be set to the same single address. For example, since the on/off data of a switch may be represented by one bit, a plurality of switches connected to different terminal devices can be assigned to bits of the same address. In other words, if one address is occupied by one terminal, there remain bits which are not assigned. The formation of such useless bits can be prevented. In addition, the number of terminals corresponding to a specific number of loads can be reduced, and the possibility of collision of signals in the random transmission can be decreased. Thus, high-speed transmission can be realized.

(ii) Terminal Activation Processing

In the terminal activation processing, when it is determined in step C11 that the activation data is present, the reception of a sync signal transmitted in the processing of step B13 or step B15 in Fig. 6 of the main console panel 12 s waited in step C12. If this sync signal is received, the control stands by for a predetermined period of time (e.g. 50 μs) in step C13, and one bit (terminal signal) of terminal data is transmitted in the current mode from the transmitter 70 onto the transmission line 14 in step C14. The current mode terminal signal is received by the main console panel 12 (step B17 in Fig. 6), and the output voltage mode from the main console panel 12 to the transmission line 14 is inverted (step B18 in Fig. 6).

In step C15, it is checked whether the terminal signal was one bit in the self address. If YES in step C15, the control advances to step C17. If NO in step C15, the control advances to step C16. In step C16, it is checked whether the terminal signal was "1". If YES in step C16, the control flow advances to step C17, and if NO in step 16, the flow advances to step C18. In step C17, the voltage mode signal of the transmission line 14 is received, and it is checked if the received signal coincides with the terminal signal that has been output just previously. If YES in step C17 it is found that the bits of the terminal data have been normally transmitted, since the terminal signal transmitted in step C14 has been received by the main console panel 12 an the voltage mode of the transmission line 14 has been inverted.

In step C18, it is checked if all bits of the terminal signal including the self address, monitor data and marker bit signal have normally been transmitted. If NO in step C18, the control flow returns to step C12, and the processing in steps C12 to c18 is repeated for the subsequent bit (terminal signal) of the terminal data. If YES in step C18, the terminal activation processing is finished, and the control flow returns to step C1.

If the content of the current mode signal transmitted in step C14 is different from the content of the voltage mode signal checked in step C17, it is determined that the current mode signal transmitted from the terminal device cannot be normally received by the main console panel 12, and the loop processing is interrupted in step C17. The flow then returns to step C1. In this case, since the activation data of the terminal device remains, the terminal activation start signal is transmitted from the main console panel 12 (step B13 in Fig. 6). When the flow advances from step C1 to step C11, the presence of activation data is determined in step C11, and the terminal activation processing is executed once again. More specifically, the terminal activation processing is repeated until the activation data is normally transmitted to the main console panel 12.

Therefore, the same single address can be assigned to a plurality of terminal devices in a bit-corresponding manner.

In addition, the possibility of collision of signals from terminal devices is reduced, and the main console panel 12 can receive monitor data from a plurality of terminal devices by a single signal transmission operation. Thus, high-speed transmission is realized.

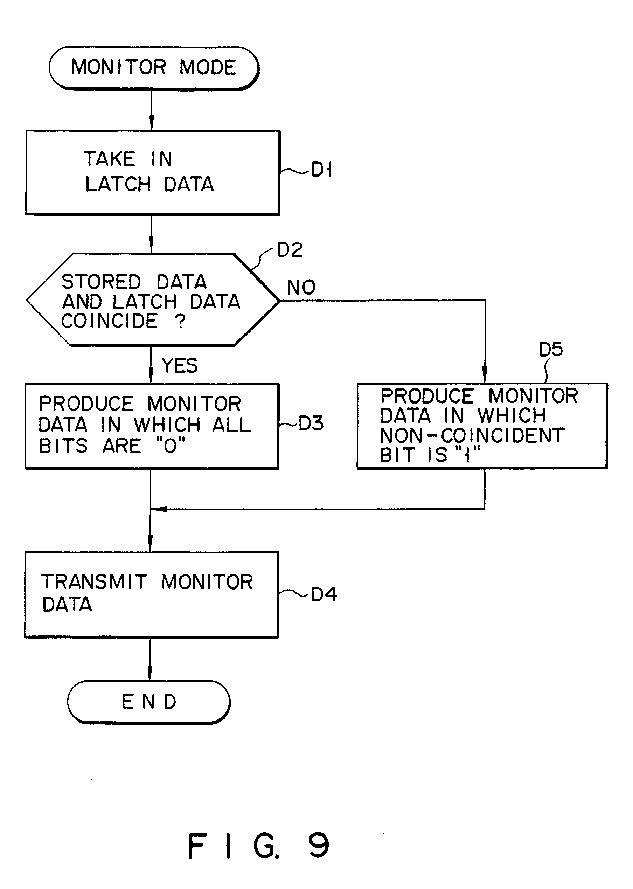

In the monitor mode as illustrated in Fig. 8C, the terminal device operates as shown in Fig. 9. When a monitor mode signal is supplied from the main console panel 12, the monitor input section 92 in the control unit 74 of the terminal device takes in latch data from the control output data latch circuit 90 (step D1). In step D2, the on/off control state of the lighting loads, which is stored in an internal memory or the like (not shown), is compared with the latch data, and the coincidence thereof is determined. If the on/off control state coincides with the latch data, monitor data in which all bits are "0" is produced in step D3. In step D4, the produced monitor data is transmitted in the current mode to the main console panel 12 from the transmitter 70 through the transmission signal line 14.

On the other hand, if the on/off control state does not coincide with the latch data in step D2, monitor data. in which the bit corresponding to the lighting device in the changed on/off state is "1", is produced, and then the control flow goes to step D4. Thus, the produced monitor data is transmitted in the current mode to the main console panel 12 from the transmitter 70 through the transmission signal line 14.

More specifically, in the monitor mode as illustrated in Fig. 8C, only the bit corresponding to the lighting load, the on/off state of which has been changed, represents "1" and is output. Since the states of all lighting loads are stored in advance in the main console panel 12, it suffices if only the lighting loads in the changed on/off state is indicated.

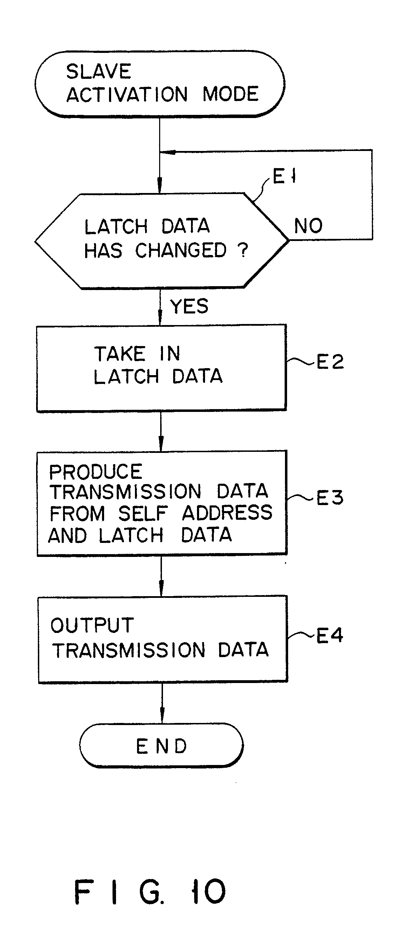

On the other hand, in the slave activation mode as illustrated in Fig. 8E, the terminal device operates as shown in Fig. 10. When latch data has changed (step E1), for example, when the relay power source circuit 76 is turned off owing to power outage, or the control output latoh circuit 90 is reset, the monitor input section 92 in the control unit 74 of the terminal device takes in the latch data from the control output data latch circuit 90 in accordance with the change of the latch data (step E2). In step E3, the control unit 74 produces monitor data from the changed latch data taken in the monitor input section 92. The latch data is combined with the self address to produce transmission data as shown in Fig. 8E. In step E4, the transmission data is transmitted in the current mode from the transmitter 70 to the main console panel 12 over the transmission signal line 14.

Of course, in the slave activation mode, if the bit in the latch data in the latch circuit 90, which corresponds any one of the lighting loads, has changed, the above-described operation is performed.

In the main console panel 12 which receives the transmission data, the stored data may be rewritten or, in the case of power outage (i.e. when monitor data having all bits of "0" is received), the stored data is transmitted after power supply is restored, thereby turning on predetermined lighting devices.

As has been stated above, in the normal state, the pulse signal generator 84 generates pulse signals, on the basis of signal transmission/reception with the master device (main console panel 12). The generated pulse signals drive the relay drive circuit 80, which in turn drives the latching relays $78_1$ to $78_4$. Thus, the lighting devices are turned on/off. The pulse signals generated from the pulse signal generator 84 are latched in the control output data latch circuit 90 as control output data. The latched data is transmitted to the master device from the monitor input section 92.

When transmission abnormality or stoppage of transmission output occurs because of short-circuit or line breakage in the transmission signal line 14 or power outage in the master device, the transmission abnormality detector 94 detects the abnormality and drives the fail-safe drive circuit 96. Thus, the contacts of the latching relays $78_1$ to $78_4$ are forcibly closed to turn on the lighting devices.

On the other hand, when power outage occurs in the separate power source connected to the lighting devices, at least, while the lighting devices are turned on, the power outage detector detects the power outage and clears the data latched in the control output data latch circuit 90. In this case, the data in the control output data latch circuit 90 is transmitted from the monitor input section 92 to the master device.

As a matter of course, the power outage detector is not limited to the photocoupler 98 employed in the above embodiment. The control unit 74 may be constituted in various manners in the aspects of software and hardware, for example, using a microcomputer, a gate array, a combination of gate ICs, etc. The latch circuit 90 may be included in the control unit 74. The master device may not have an operation input device such as operation switches.

In the above embodiment, voltage mode signals are transmitted from the main console panel side, and current mode signals are transmitted from the terminal device side. However, voltage mode signals, for example, may be transmitted from both the main console panel side and the terminal device side.

Further, the above-described embodiment is directed to the random transmission. However, this invention is applicable to a cyclic transmission system if the same address is assigned to a plurality of terminal devices. In this case, the flowchart of Fig. 6 is applicable, excepting steps B1 and B13 to B20.

In the embodiment, the current mode signals RPI are transmitted from the terminal device in the terminal transmission period RTM, shown in Fig. 3A, in accordance the sync signal SYNC transmitted from the main console panel 12. Instead of using the signals RPI, however, high-frequency signals may be transmitted onto the transmission line.

In the structure of the terminal device shown in Fig. 4, the number of lighting loads is one; however, obviously, a plurality of lighting loads may be provided, as shown in Figs. 5A and 5B.

The change in waveform level of voltage mode signal is not limited to the inversion of polarity. It suffices if a predetermined difference in level is provided.

The voltage signals transmitted to the terminal devices are not limited to the bipolar pulses.

The present invention is applicable to a system, wherein a current mode signal from a terminal device is not converted into a voltage signal.

As has been described above in detail, the present invention provides a lighting remote monitor/control system wherein the power source for the lighting devices controlled in the terminal devices is provided separately from the power source for the master device. When abnormality occurs in the transmission signal line, the fail-safe function is performed to turn on all lighting devices. When the power source for the lighting devices has failed, the fail-safe function is prohibited and the turning on/off state at the time of power failure is maintained.

This invention further provides a lighting remote monitor/control system wherein the data representative of the detection of power outage is transmitted to the master device, at least, during the turning-on of the lighting device.

## Claims

1. A system for remotely controlling a plurality of lighting devices, comprising: a master device (12) for controlling the turning on/off states of all lighting devices; a transmission signal line (14) for transmitting control data for controlling the turning on/off states of the lighting devices from the master device (12); and a plurality of terminal devices ($16_1$ to $16_n$, 20), each connected between the transmission signal line (14) and the lighting devices, for turning on/off the lighting devices in accordance with the control data transmitted from the master device (12) through the transmission signal line (14),
characterized in that each of said terminal devices includes:
a control power source circuit (38; 72) for receiving a signal voltage through the transmission signal line (14) and generating a first source power for controlling a self terminal device in said terminal devices;
a relay power source circuit (56; 76), connected to a load power source for driving said lighting devices, which is separate from said control powar source circuit (38; 72), for generating a second source power;
a plurality of latching relays (46, 48, 50; $78_1$ to $78_4$) having contacts (50; $78_{11}$ to $78_{42}$) arranged on power lines between the relay power source circuit (56; 76) and the lighting devices, said contacts functioning to open/close the power lines, and said latching relays functioning to switch the contacts (50; $78_{11}$ to $78_{42}$);
relay control means (40; 74, 80) for controlling said latching relays (46, 48, 50; $78_1$ to $78_4$), on the basis of the control data input from the master device (12) through the transmission signal line (14);
transmission abnormality detection circuit (42; 94) for detecting the transmission abnormality in said transmission signal line (14); and
a fail-safe drive circuit (44, 54; 76) for driving the latching relays (46, 48, 50; $78_1$ to $78_4$) to open/close the contacts (50; $78_{11}$ to $78_{42}$), when said transmission abnormality detection circuit (42; 94) has detected transmission abnormality.
2. The system according to claim 1, characterized in that each of said latching relays (46, 48, 50) includes an ON-winding (48) for closing the contacts (50), and an OFF-winding (46) for opening said contacts (50), and
that said fail-safe drive circuit (44, 54) includes driving means for driving the ON-winding (48) in response to a predetermined-level output from the transmission abnormality detection circuit (42).
3. The system according to claim 2, characterized in that said ON-winding (48) is connected at one end to said relay power source circuit (56), and that said driving means includes:
a transistor (54) having a base, an emitter connected to a ground, and a collector connected to the other end of said ON-winding (48); and
an OR circuit (44) for obtaining a logical sum of the output from the relay control means (40) and the output from the transmission abnormality detection circuit (42), an output terminal of said OR circuit (44) being connected to the base of the transistor (54), and the transistor (54) being turned on when at least one of the outputs from the relay control means (40) and the transmission abnormality detection circuit (42) exceeds a predetermined level.
4. The system according to claim 1, characterized in that said relay power source circuit (76) is electrically connected to said control power source circuit (72).
5. The system according to claim 4, characterized in that said relay control means (74, 80) includes:
control signal generating means for generating a control signal for controlling the latching relays ($78_1$ to $78_4$), on the basis of the control data; and
a photocoupler circuit (86) for relaying the control signal generated from the control signal generating means to the latching relays ($78_1$ to $78_4$).
6. The system according to claim 5, characterized in that said control signal generating means includes pulse signal generating means (84) for generating a pulse signal for controlling the latching relays ($78_1$ to $78_4$), on the basis of the input signal from the transmission signal line (14),
that said photocoupler circuit (86) relays the pulse signal output from the pulse signal generating means (84), and
that said relay control means (74, 80) further includes a relay drive circuit (88) for operating the latching relays ($78_1$ to $78_4$), in response to the pulse signal relayed from the photocoupler circuit (86).
7. The system according to claim 6, characterized by further comprising:
a control output data latch circuit (90) for latching the pulse signal from the pulse signal generating means (84) as control output data;
a power outage detection circuit for clearing the control output data latched in the control output data latch circuit (90), when no transmission abnormality is detected by the transmission abnormality detection circuit (94) and said load power source is stopped; and
monitor input means (84) for detecting a change, if any, in the control output data latched in the control output data latch circuit (90), and transmitting data representative of the change to the master device (12) through the transmission signal line (14).

8. The system according to claim 7, characterized in that said power outage detection circuit includes a photocoupler (98) driven by the second source power generated by the relay power source circuit (76), an output terminal of said photocoupler (98) being connected to a clear terminal (CLR) of the control output data latch circuit (90).

9. The system according to claim 8, characterized in that said monitor input means (92) includes means for reading the state of the control output data latch circuit (90), when the control output data latch circuit (90) is cleared, and transmitting monitor data representative of the read state, along with address data assigned specifically to the terminal device, to the master device (12) over the transmission signal line (14) in a current mode.

10. The system according to claim 9, characterized in that said fail-safe drive circuit (96) includes means (Tr3) for supplying a signal for driving the photocoupler circuit (86), when the transmission abnormality detection circuit (94) has detected transmission abnormality.

10
AC100V
AC100/200V
AC100/200V
AC100V
AC100V
TRANSMISSION SIGNAL LINE
14
MAIN CONSOLE PANEL
12
$16_1$
16
$16_n$
18
$18_1$
$18_n$
20
20
TERMINAL DEVICE
TERMINAL DEVICE
TERMINAL DEVICE
TERMINAL DEVICE
TERMINAL DEVICE
TERMINAL DEVICE
CONTROL OUTPUTS (TO LIGHTING LOADS)
CONTROL OUTPUTS (POWER LOADS)
MONITOR INPUTS (CONTACT SIGNALS)
CONTROL OUTPUTS (TO LIGHTING LOADS)
CONTROL OUTPUTS (TO LIGHTING LOADS)

F I G. 1

SYNC SIGNAL GENERATOR
30
22
26
14
SIGNAL PROCESSOR
F/F
DRIVER
32
LEADING EDGE DETECTOR
28
34
CURRENT DETECTOR
24
12

F I G. 2

ST
ADR/CNT
RTM
OV
RPI
ST
ADR/CNT
SYNC
OV
RPV

F I G. 3A

F I G. 3B

14
TRANSMITTER
36
POWER SOURCE
38
SIGNAL PROCESSOR
40
OFF-SIGNAL
ON-SIGNAL
TRANSMISSION ABNORMALITY DETECTOR
42
44
52
54
46
48
56
66
68
60
58
64
62
50
50
TO LOAD POWER SOURCE
TO LIGHTING LOAD

F I G. 4

TO TRANSMISSION SIGNAL LINE
70
72
96
VDD
Tr 3
94
VDD
74
VDD
Tr2
84
D O 7
D O 0
CONTROL UNIT
PULSE SIGNAL GENERATOR
DI0
DI3
MONITOR INPUT SECTION
Tr1
92
LATCH
CK CLR
86
80
90
102
100
VDD
VDD
98

F I G. 5A

76
SEPARATE POWER SOURCE
78₁₁ 82
78₁₂
78₂₁
78₂₂
78₃₁
78₃₂
78₄₁
78₄₂
TO LIGHTING DEVICES
DRIVER
88
S
R
78₁
78₂
78₃
78₄
86
80
98

F I G. 5B

START
IS ACTIVATION DATA PRESENT ?
B1
NO
YES
B2
TRANSMIT START AND DATA SIGNALS
B3
END OF TRANSMISSION ?
NO
YES
B4
RECEIVE SYNC SIGNAL
RECEIVE RETURN SIGNAL
B5
B6
IS RETURN SIGNAL PRESENT ?
NO
YES
B7
INVERT TRANSMISSION VOLTAGE
B8
END OF RETURN ?
NO
YES
B11
IS RETURN DATA OK ?
NO
YES
CANCEL ACTIVATION
B12
B13
TRANSMIT TERMINAL ACTIVATION START AND SYNC SIGNALS
B14
IS TERMINAL ACTIVATION PRESENT ?
NO
YES
B15
TRANSMIT SYNC SIGNAL
RECEIVE TERMINAL DATA SIGNAL
B16
B17
IS SIGNAL PRESENT ?
NO
YES
B18
INVERT TRANSMISSION VOLTAGE
B19
END OF SIGNAL RECEPTION ?
NO
YES

F I G. 6

START
C1
IS CENTRAL ACTIVATION SIGNAL PRESENT ?
NO
YES
C2
DATA SIGNAL RECEIVED
C3
RECEPTION COMPLETED ?
NO
YES
C4
ADDRESS COINCIDES ?
NO
YES
C20
DATA PROCESSING
C5
SYNC SIGNAL RECEPTION
C6
HAS PREDETERMINED TIME PASSED AFTER SYNC SIGNAL ?
NO
YES
C7
RETURN SIGNAL TRANSMISSION
C8
IS RETURN SIGNAL "1"?
NO
YES
C9
DOES TRANSMISSION DATA COINCIDE WITH VOLTAGE SIGNAL ?
NO
YES
C10
IS RETURN COMPLETED ?
NO
YES
C11
IS ACTIVATION DATA PRESENT ?
NO
YES
C12
SYNC SIGNAL RECEIVED
C13
HAS PREDETERMINED TIME PASSED AFTER SYNC SIGNAL ?
NO
YES
C14
DATA TRANSMISSION
C15
IS TERMINAL SIGNAL ADDRESS ?
NO
YES
C16
IS TERMINAL SIGNAL "1"?
YES
NO
C17
DOES TRANSMISSION DATA COINCIDE WITH VOLTAGE SIGNAL ?
NO
YES
C18
IS TRANSMISSION COMPLETED ?
NO
YES
C19
ACTIVATION COMPLETED

FIG. 7

SYNC PULSE
ST
SLAVE TRANSMISSION PERIOD
ST
ACTIVATION ENABLE
ZERO-CROSSING
TRANSMISSION/RECEPTION SWITCHING PERIOD
ST
ADR
CONTROL DATA (CNT)
ACK
MARKER BIT
ST
4
12
4
4
8
4
8
1
1
1
ZERO-CROSSING
CONTROL
MODE
CHECK SUM
MODE
CH DESIGNATION
MASTER ACTIVATION
RETURN FLAG
ERROR FLAG
TRANSMISSION TIME
RTM

F I G. 8A

F I G. 8B

ST
ADR
CHECK SUM
MONITOR DATA
MARKER BIT
ST
4
12
8
8
4
8
1
1
1
ZERO-CROSSING
MODE
DUMMY
MONITOR CH DESIGNATION
ERROR FLAG
RETURN FLAG
MASTER ACTIVATION
TRANSMISSION/RECEPTION SWITCHING PERIOD
TRANSMISSION TIME

FIG. 8C

RETURN FLAG
MARKER BIT
CHECK SUM
ST
ADR
MONITOR DATA
ST
4
12
8
8
4
8
1
1
1
ZERO-CROSSING
MODE
DUMMY
ERROR FLAG
CANCEL CH DESIGNATION
TRANSMISSION/RECEPTION SWITCHING PERIOD
MASTER ACTIVATION

FIG. 8D

ST
MODE
2
DUMMY
4
SELF ADDRESS
12
ST
ZERO-CROSSING
ACTIVATION ENABLE
MODE
2
CH DESIGNATION
8
MONITOR DATA
8
1
ST
MARKER BIT
ZERO-CROSSING
ACTIVATION ENABLE

F I G. 8E

MONITOR MODE
TAKE IN LATCH DATA
D1
D2
STORED DATA AND LATCH DATA COINCIDE ?
NO
YES
D5
PRODUCE MONITOR DATA IN WHICH ALL BITS ARE "0"
D3
PRODUCE MONITOR DATA IN WHICH NON-COINCIDENT BIT IS "1"
TRANSMIT MONITOR DATA
D4
END

F I G. 9

SLAVE ACTIVATION MODE
E1
LATCH DATA HAS CHANGED ?
NO
YES
TAKE IN LATCH DATA
E2
PRODUCE TRANSMISSION DATA FROM SELF ADDRESS AND LATCH DATA
E3
OUTPUT TRANSMISSION DATA
E4
END

FIG. 10